# DEMANDE DE BREVET EUROPEEN

(11) **EP 1 398 545 A2**
(43) Date de publication de la demande: **17.03.2004**
(21) Numéro de dépôt: 03292152.0
(22) Date de dépôt: 02.09.2003
(51) Int. Cl.: F16H 63/38

(54) **Dispositif de commande de boîtes de vitesses à couple de rappel compensé**

(30) Priorité: 13.09.2002 FR 0211386
(71) Demandeur: Peugeot Citroen Automobiles SA, 92200 Neuilly sur Seine (FR)
(72) Inventeur: Ploe Pierre, 92800 Puteaux (FR)
(74) Mandataire: Coester, Jacques Charles

(57) **Abrégé**

L'invention concerne un dispositif de commande de boîtes de vitesses comprenant notamment une tige de sélection (2), un doigt (20) de passage de vitesse et un mécanisme de rappel (4) de la tige de sélection (2) dans sa position neutre, ce mécanisme comprenant au moins une première came (51) et une deuxième came (52) portées par ladite sélection (2) ainsi qu'une première bille (61) et une deuxième bille (62) élastiquement sollicitées vers les première et deuxième cames.
Selon l'invention, le mécanisme de rappel (4) comprend des moyens pour que les efforts exercés par les billes sur les cames soient strictement compensés.

## Description

La présente invention concerne de façon générale la commande des boîtes de vitesses pour véhicules à moteur thermique, notamment pour véhicules automobiles.

Plus précisément, l'invention concerne un dispositif de commande de boîtes de vitesses du type de ceux qui comprennent au moins : un boîtier ; une tige de sélection allongée suivant un axe longitudinal ; un organe menant, tel qu'un doigt de passage de vitesses, porté transversalement par la tige de sélection ; une pluralité d'organes menés commandés par l'organe menant et dont chacun commande une fourchette de la boîte de vitesses ; et un mécanisme de rappel comprenant au moins une première came portée par ladite sélection et au moins une première bille liée au boîtier et transmettant à la première came une première force élastique, la première bille coopérant avec la première came pour exercer sur ladite sélection, en fonction d'un écart angulaire entre la position de rotation qu'adopte cette tige autour de l'axe longitudinal et sa position neutre, un couple élastique de rappel qui sollicite cette tige vers sa position neutre pour tout écart angulaire au plus égal à un premier angle limite prédéterminé.

Les dispositifs répondant à cette définition sont bien connus de l'homme du métier et sont largement exploités dans l'industrie automobile depuis de nombreuses années.

Bien que remplissant de façon satisfaisante leur fonction principale, ces dispositifs souffrent de quelques faiblesses qui en compliquent la fabrication ou en limitent les performances.

Tout d'abord, la nécessité de prévoir une bille de diamètre suffisant pour assurer un roulement satisfaisant de la bille sur la came oblige à prévoir sur cette dernière une empreinte de rayon correspondant relativement important, de sorte que l'amplitude de la rotation que ladite sélection doit subir autour de l'axe longitudinal pour sortir totalement la bille de l'empreinte est elle-même relativement élevée.

D'autre part, dans la mesure où la force élastique que la bille exerce sur la came doit être relativement importante pour éviter toute rotation intempestive de ladite sélection autour de l'axe longitudinal, et où cette force s'exerce transversalement à ladite sélection, cette tige est sollicitée de façon intense contre ses paliers, ce qui conduit à la nécessité de prévoir des paliers à bille et un traitement de surface de la tige, donc un surcoût de production sensible.

Enfin, comme le contact entre la bille et la came met en jeu une force élastique d'intensité élevée, il est également nécessaire de prévoir un traitement de surface de la came pour éviter tout matage et tout usure prématurée de celle-ci.

Pour tenter de résoudre certains des inconvénients ci-dessus, la demanderesse a proposé dans la demande de brevet français No. 0 111 868 (publiée le 14 mars 2003 sous le n°2 829 549) que le mécanisme de rappel comprenne en outre au moins une deuxième came portée par ladite sélection et au moins une deuxième bille liée au boîtier et transmettant à la deuxième came une deuxième force élastique, la tige de sélection en position neutre recevant des billes, par l'intermédiaire des cames, une force résultante inférieure à chacune des première et deuxième forces. Et, à cet effet, la cuvette de la première came et l'arête de la deuxième came sont symétriques par rapport à un plan médian et allongées suivant l'axe longitudinal et les première et deuxième billes sont respectivement montées mobiles, parallèlement à l'axe transversal, dans de première et deuxième douilles fixées au boîtier, le dispositif comprenant de premier et second ressorts respectivement disposés dans les première et deuxième douilles et sollicitant les première et deuxième billes vers les première et deuxième came respectives.

Cependant, l'utilisation de deux douilles à billes indépendantes et présentant chacune un ressort de force pouvant varier de manière inégale dans le temps implique ainsi des efforts inégaux sur le doigt de passage des vitesses et un couple de rappel non nul en position neutre, ce qui est défavorable au rendement en rotation du doigt de passage des vitesses.

Dans ce contexte, la présente invention a pour but de proposer un dispositif de commande de boîtes de vitesses permettant de pallier l'un au moins des inconvénients ci-dessus.

À cette fin, le dispositif de commande de boîtes de vitesses selon l'invention, par ailleurs conforme à la définition générique qu'en donne le préambule ci-dessus, est essentiellement caractérisé en ce que, dans le mécanisme de rappel qui comprend au moins une deuxième came portée par la tige de sélection et au moins une deuxième bille liée au boîtier et transmettant à la deuxième came, une deuxième force élastique, des moyens de sollicitation sont prévus pour que ladite sélection en position neutre reçoive des billes, par l'intermédiaire des cames, une force résultante toujours strictement nulle.

En d'autres termes, la force élastique exercée par la première bille sur la tige est complètement contrebalancée par la force élastique qu'exerce la deuxième bille, cette caractéristique ayant pour effet à la fois de réduire la sollicitation de la tige de sélection contre ses paliers, et de permettre une réduction de la sollicitation de chaque bille sur la came correspondante, dans la mesure où deux forces élastiques sont utilisées pour définir la position neutre de la tige de sélection, et où chacune d'elle peut donc être plus faible que la force élastique unique utilisée antérieurement dans une réalisation où le mécanisme de rappel comprend une seule came portée par la tige de sélection et une seule bille transmettant à la came une force élastique.

En outre et conformément à l'invention, la première bille exerce sur la tige de sélection un couple élastique de rotation autour d'un axe transversal à l'axe longitudinal, les première et deuxième billes étant respectivement montées mobiles, parallèlement à l'axe transversal, dans de première et deuxième douilles montées coulissantes dans le boîtier.

De préférence, les moyens de sollicitation comprennent un ressort unique, dont les extrémités respectives portent contre les première et deuxième douilles et sollicitent les première et deuxième billes vers les première et deuxième cames respectives en produisant une force résultante strictement nulle sur la tige de sélection de vitesse en position neutre.

Dans un mode de réalisation préféré de l'invention, les première et deuxième billes sont par exemple diamétralement opposées l'une à l'autre par rapport à l'axe transversal.

Les première et deuxième forces élastiques peuvent alors être antagonistes et dirigées vers l'axe transversal pour la position neutre de la tige de sélection, ces forces se compensant alors mutuellement de façon stricte car elles ont exactement le même module pour la position neutre de la tige de sélection.

En pratique, il est utile de prévoir que chacune des première et deuxième cames, ou l'une d'elles au moins, comprenne des rampes symétriques par rapport à un plan médian passant par l'axe transversal et parallèle à l'axe longitudinal.

Par ailleurs, la première bille coopère de préférence avec la première came pour exercer sur la tige de sélection, en fonction de l'écart angulaire entre la position de rotation qu'adopte cette tige autour de l'axe longitudinal et sa position neutre, un couple élastique d'engagement qui éloigne cette tige de sa position neutre et la sollicite vers l'une de ses positions actives de rotation pour tout écart angulaire au moins égal, en valeur absolue, au premier angle limite déterminé.

Selon un autre aspect important de l'invention, les première et deuxième cames peuvent être différentes l'une de l'autre.

En particulier, la deuxième bille peut coopérer avec la deuxième came pour exercer sur la tige de sélection, en fonction de l'écart angulaire entre la position de rotation qu'adopte cette tige autour de l'axe longitudinal et sa position neutre, un couple élastique d'engagement qui éloigne cette tige de sa position neutre et la sollicite vers l'une de ses positions actives de rotation pour tout écart angulaire au moins égal, en valeur absolue, à un deuxième angle limite déterminé, inférieur au premier angle limite déterminé.

Pour ce faire, il est possible de prévoir que, pour la position neutre de la tige de sélection, la première came offre une cuvette à la première bille et la deuxième came une arête à la deuxième bille.

Dans la mesure où la seconde bille peut ainsi quitter l'arête de la deuxième came pour une rotation de faible amplitude de la tige de sélection depuis sa position neutre, et où la force alors exercée par la seconde bille sur la seconde came engendre sur la tige un couple d'engagement qui s'oppose au couple de rappel qu'engendre la force de contact exercée par la première bille sur la cuvette de la première came, le couple résultant exercé sur la tige devient un couple d'engagement pour une rotation de la tige d'amplitude beaucoup plus faible que dans les dispositifs connus.

De préférence, la cuvette de la première came et l'arête de la deuxième came, ou au moins l'une de celles-ci, est symétrique par rapport au plan médian et allongée parallèlement à l'axe transversal.

D'autres caractéristiques et avantages de l'invention ressortiront clairement de la description qui en est faite ci-après, à titre indicatif et nullement limitatif, en référence aux dessins annexés, dans lesquels:

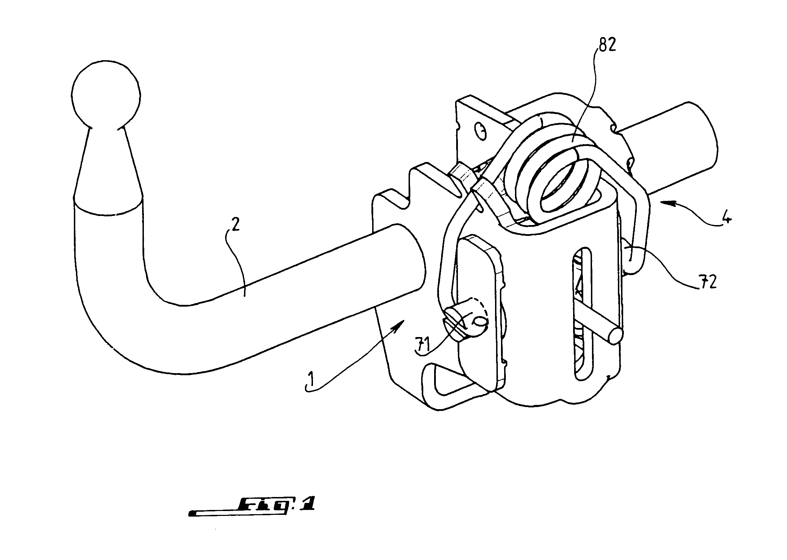

- la Figure 1 est une vue en perspective d'un dispositif conforme à l'invention;

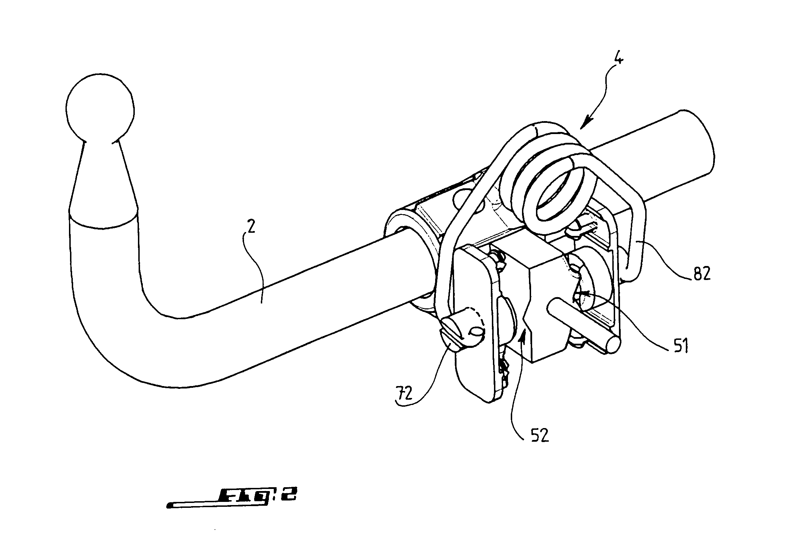

- la Figure 2 est une vue en perspective illustrant le dispositif de la Figure 1, privé de son boîtier;

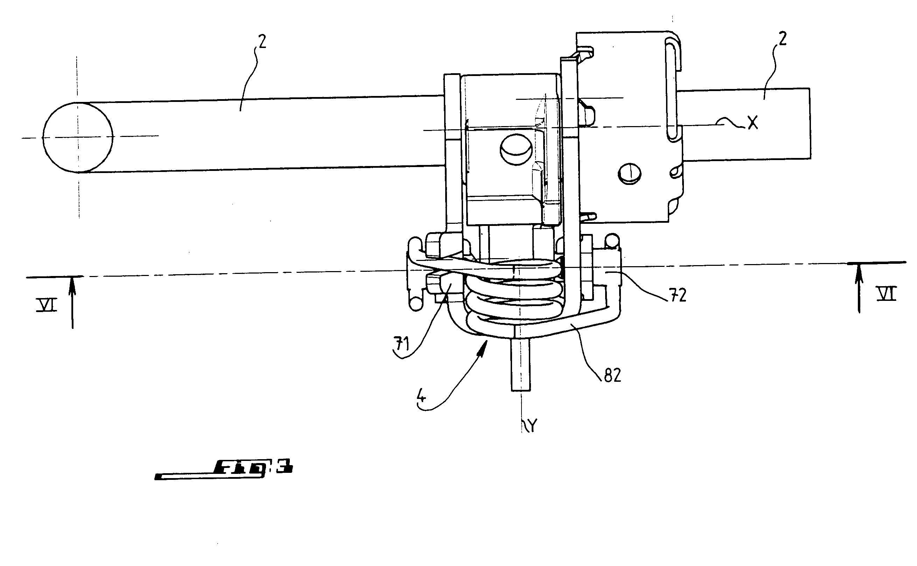

- la Figure 3 est une vue de dessus du dispositif de la Figure 2 ;
- la Figure 4 est une vue de face du dispositif de la Figure 2 ;
- la Figure 5 est une vue semblable à celle de la Figure 4, épurée de quelques détails; et
- la Figure 6 est une vue en coupe partielle du dispositif illustré à la Figure 1, ce dispositif étant observé suivant l'incidence définie par les flèches VI-VI de la Figure 3.

Comme énoncé précédemment, l'invention concerne un dispositif de commande de boîte de vitesses comprenant essentiellement un boîtier 1, une tige de sélection 2, un doigt 20 de passage de vitesses formant organe menant et porté transversalement par la tige de sélection 2, un ensemble d'organes menés (non représentés mais d'un type connu par exemple par la demande de brevet français No. 0 111 868 de la demanderesse, publiée le 14 mars 2003 sous le n°2 829 549) et un mécanisme de rappel 4.

La tige de sélection 2 est allongée suivant un axe longitudinal X et monté mobile en rotation autour de l'axe longitudinal X et en translation le long de cet axe, par exemple au moyen de paliers solidaires du boîtier 1 et non représentés.

Comme cela est par ailleurs connu, les organes menés prennent en général la forme d'encoches ou de crosses pratiquées dans des barrettes respectives. En outre, chacun des organes menés peut être commandé par le doigt de passage 20 de la tige 2, et commander à son tour, par l'intermédiaire de la barrette qui le porte, une fourchette correspondante de la boîte de vitesses.

Pour plus de détail concernant la coopération de la tige de sélection et des organes menés ainsi que l'action sur la boîte de vitesses, on pourra se reporter de manière avantageuse à la demande de brevet français No 0 111 868 rappelée ci-dessus.

De manière à bien comprendre ce qui suit, il suffit de noter que les organes menés peuvent adopter une position de repos dans laquelle ils sont alignés suivant l'axe longitudinal X et que chacun de ses organes peut aussi, par translation suivant l'axe transversal Y, adopter deux positions actives de translation disposées symétriquement de part et d'autre de sa position de repos.

De même, la tige de sélection 2, initialement placée dans sa position angulairement neutre, est entraînée en rotation par le conducteur du véhicule, dans un sens ou dans l'autre, pour adopter l'une ou l'autre de ses deux positions actives de rotation disposées symétriquement de part et d'autre de la position neutre, et pour permettre corrélativement au doigt de passage 20 de passer de sa position de repos à sa première position active ou à sa deuxième position active.

Comme on le voit aux dessins, le mécanisme de rappel 4 comprend une première came 51 qui est portée par ladite sélection 2, et une première bille 61 et, de même, une seconde came 52, également portée par ladite sélection 2, et une deuxième bille 62.

Conformément à l'invention, les billes 61, 62 sont montées mobiles, parallèlement à l'axe longitudinal, respectivement dans une douille 71, 72 montée coulissante dans le boîtier 1 et sur laquelle agissent les extrémités respectives 80, 81 d'un ressort 82 précontraint en compression.

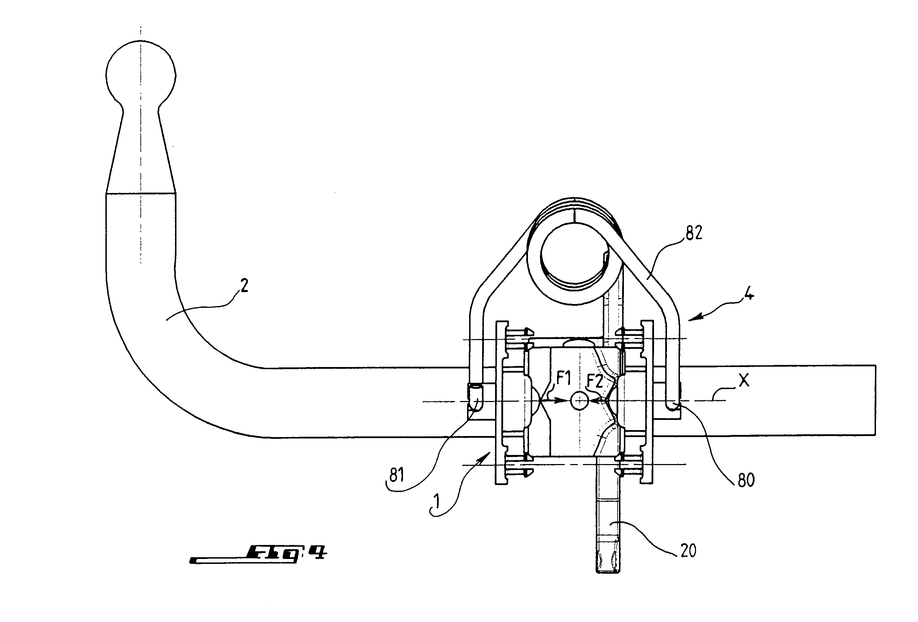

Par son extrémité 80, le ressort 82 sollicite élastiquement la douille 71, de sorte que la bille 61 s'appuie sur la came 51 et lui transmet une force élastique F1 (figure 4).

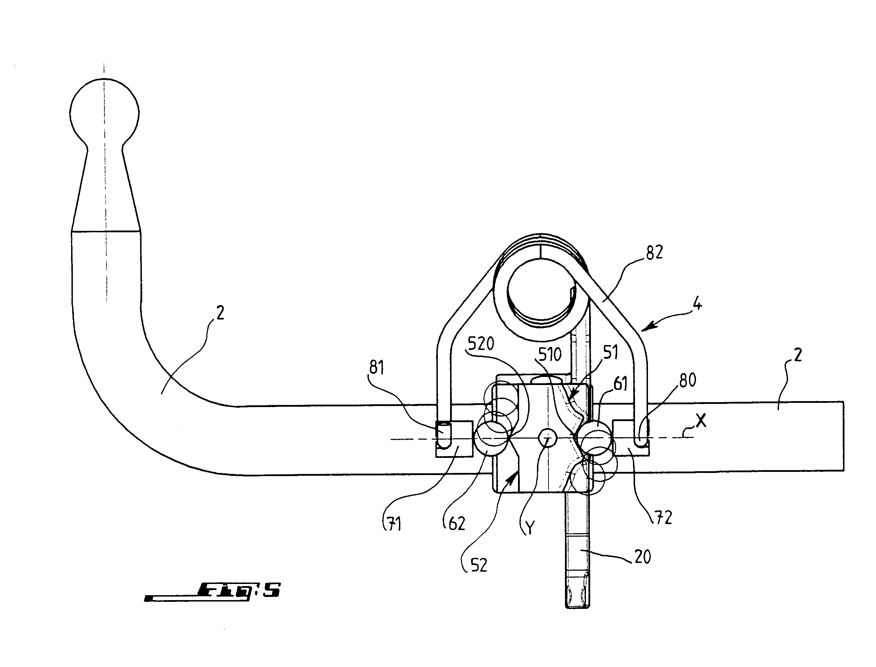

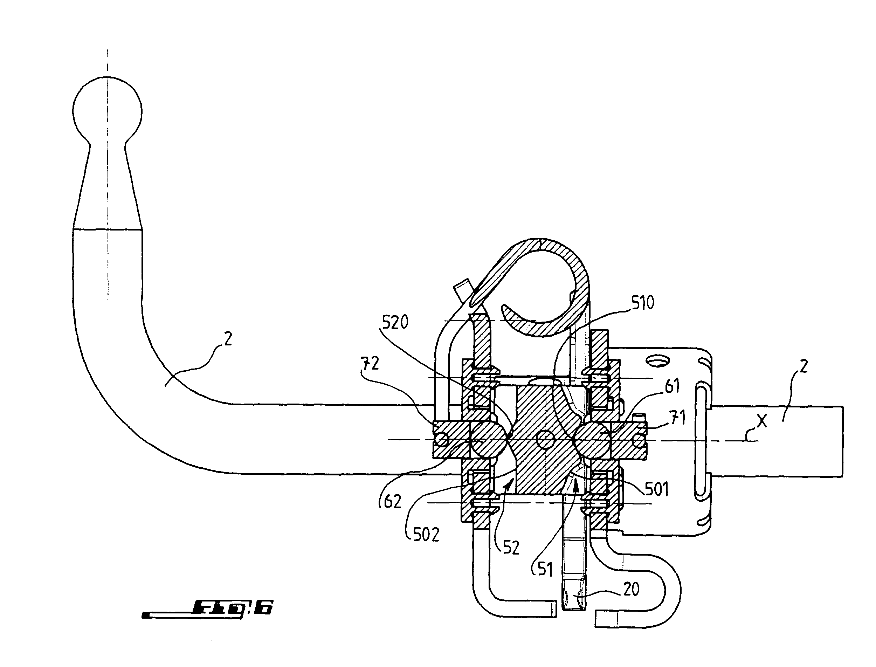

Comme on le voit notamment aux figures 5 et 6, la came 51 comprend deux rampes 501 allongées dans la direction d'un axe Y transversal à l'axe longitudinal X et elles sont symétriques l'une de l'autre par rapport à un plan médian qui passe par l'axe transversal Y et qui est parallèle à l'axe longitudinal X.

Les rampes 501 encadrent une cuvette 510, qui appartient également à la came 51, qui est symétrique par rapport au plan médian, et qui est elle aussi allongée dans la direction de l'axe transversal Y.

La bille 61 s'appuie donc sur le fond de la cuvette 510 dans la position neutre de la tige de sélection 2, alors qu'elle s'appuie sur l'une ou l'autre des rampes 501 lorsque la tige de sélection se déplace vers l'une ou l'autre de ses positions actives (voir figure 5).

La bille 61 exerce ainsi sur la tige 2, par l'intermédiaire de la came 51, un couple élastique de rotation autour de l'axe transversal Y dont le module et le sens dépendent de la précontrainte du ressort 82 et de l'angle que forme, au point de tangence de la bille 61 et de la came 51, la normale à la surface de la came 51 par rapport au plan médian.

Lorsque la tige 2 subit une rotation de faible amplitude autour de l'axe longitudinal X par rapport à sa position neutre, et plus précisément une rotation d'amplitude inférieure à celle d'un angle limite déterminé, la bille 61 coopère avec la cuvette 510 de la came 51 pour exercer sur la tige de sélection 2 un couple élastique de rappel qui sollicite cette tige 2 vers sa position neutre.

Lorsque, en revanche, la tige 2 a subi, par rapport à sa position neutre, une rotation d'amplitude significative autour de l'axe longitudinal X, et plus précisément une rotation d'amplitude supérieure à celle de l'angle limite indiqué précédément, la bille 61 coopère avec l'une ou l'autre des rampes 501 de la came 51 pour exercer sur la tige de sélection 2 un couple élastique d'engagement qui éloigne cette tige 2 de sa position neutre et la sollicite vers l'une ou l'autre de ses positions actives.

Par son extrémité 81, le ressort 82 sollicite élastiquement la douille 71, de sorte que la bille 61 s'appuie sur la came 52 et lui transmet une force élastique F2 (figure 4).

Dans le mode de réalisation préféré et illustré, les billes 61 et 62 sont diamétralement opposées l'une à l'autre par rapport à l'axe transversal Y, et les forces élastiques F1 et F2 sont antagonistes, dirigées vers l'axe transversal et, du fait de l'action du ressort 82, ont exactement le même module pour la position neutre de la tige de sélection 2.

Dans ces conditions, la force résultante que reçoit la tige de sélection 2, en position neutre, de la part des billes 61 et 62, par l'intermédiaire des cames 51 et 52 est strictement nulle.

Il serait cependant possible de prévoir une autre disposition que celle du ressort unique 82 à deux extrémités 80, 81 agissant respectivement sur des douilles 71 et 72 montées coulissantes dans le boîtier, pourvu que la tige de sélection en position neutre reçoive des billes 61 et 62, par l'intermédiaire des cames 51 et 52, une force résultante qui soit strictement nulle.

De même, une compensation totale des forces élastiques appliquées à la tige 2 pourrait être obtenue avec un nombre de cames et de billes différent de deux, par exemple avec trois cames, disposées à 120° l'une de l'autre autour de l'axe transversal Y, et trois billes correspondant.

La came 52 comprend deux rampes 502, allongées dans la direction de l'axe transversal Y, et symétriques l'une de l'autre par rapport à un plan médian qui passe par l'axe transversal Y et qui est parallèle à l'axe longitudinal X.

Selon un autre aspect important de l'invention, les cames 51 et 52 sont différentes l'une de l'autre.

De préférence, les rampes 502 forment les flancs d'une arête 520, qui appartient également à la came 52, qui est symétrique par rapport au plan médian, et qui est elle aussi allongée dans la direction de l'axe transversal Y.

La bille 62 est en appui et en équilibre métastable sur l'arête 520 dans la position neutre de la tige de sélection 2, et en appui sans équilibre sur les rampes 502 dès que la tige de sélection 2 s'est écartée angulairement de sa position neutre d'un angle au moins égal à un angle limite, lui-même sensiblement inférieur à l'angle limite mentionné ci-dessus dont doit tourner la tige de sélection 2 pour permettre à la bille 61 de sortir de la cuvette 510.

Ainsi, dès que la tige de sélection 2 s'est écartée angulairement de sa position neutre d'un angle au moins égal à l'angle limite ci-dessus, la bille 62 coopère avec la came 52 pour exercer sur cette tige un couple élastique d'engagement qui l'éloigne de sa position neutre et qui la sollicite vers l'une de ses positions actives de rotation.

Grâce à cet agencement, le couple résultant appliqué à la tige par l'action combinée des billes 61 et 62 sur les cames 51 et 52 devient un couple d'engagement pour un angle de rotation relativement faible de la tige de sélection 2 par rapport à sa position neutre.

## Revendications

1. Dispositif de commande de boîtes de vitesses comprenant au moins : un boîtier (1) ; une tige de sélection (2) allongée suivant un axe longitudinal (X) ; un organe menant, tel qu'un doigt (20) de passage de vitesse, porté transversalement par la tige de sélection (2) ; une pluralité d'organes menés commandés par l'organe menant et dont chacun commande une fourchette de la boîte de vitesses ; un mécanisme de rappel (4) comprenant au moins une première came (51) portée par la tige de sélection (2) et au moins une première bille (61) liée au boîtier (1) et transmettant à la première came (51) une première force élastique (F1), la première bille (61) coopérant avec la première came (51) pour exercer sur ladite sélection (2), en fonction d'un écart angulaire entre la position de rotation qu'adopte cette tige (2) autour de l'axe longitudinal (X) et sa position neutre, un couple élastique de rappel qui sollicite cette tige (2) vers sa position neutre pour tout écart angulaire au plus égal à un premier angle limite déterminé, le mécanisme de rappel (4) comprenant en outre au moins une deuxième came (52) portée par la tige de sélection (2) et au moins une deuxième bille (62) liée au boîtier (1) et transmettant à la deuxième came (52) une deuxième force élastique (F2), **caractérisé en ce que** des moyens de sollicitation sont prévus pour que la tige de sélection (2) en position neutre reçoive des billes (61, 62), par l'intermédiaire des cames (51, 52), une force résultante toujours strictement nulle, la première bille (6) exerçant sur la tige de sélection (2) un couple élastique de rotation autour d'un axe (Y) transversal à l'axe longitudinal (X), les première et deuxième billes (61, 62) étant respectivement montées mobiles, parallèlement à 1 (axe transversal (Y) dans de première et deuxième douilles (71, 72) montées coulissantes dans le boîtier (1).

2. Dispositif de commande de boîtes de vitesses suivant la revendication 1, **caractérisé en ce que** les moyens de sollicitation comprennent un ressort unique (82) dont les extrémités respectives portent contre les première et deuxième douilles (71, 72) et sollicitent les première et deuxième billes (61, 62) vers les première et deuxième cames (51, 52) respectives en produisant une force résultante strictement nulle sur la tige de sélection de vitesse (2) en position neutre.

3. Dispositif de commande de boîtes de vitesses suivant la revendication 1, **caractérisé en ce que** les première et deuxième billes (61, 62) sont diamétralement opposées l'une à l'autre par rapport à l'axe transversal (Y) .

4. Dispositif de commande de boîtes de vitesses suivant la revendication 1, **caractérisé en ce que** les première et deuxième forces élastiques (F1, F2) sont antagonistes et dirigées vers l'axe transversal (Y) pour la position neutre de la tige de sélection (2).

5. Dispositif de commande de boîtes de vitesses suivant la revendication 1, **caractérisé en ce que** les première et deuxième forces élastiques (F1, F2) ont exactement le même module pour la position neutre de la tige de sélection (2).

6. Dispositif de commande de boîtes de vitesses suivant la revendication 1, **caractérisé en ce que** l'une au moins des première et deuxième cames (51, 52) comprend des rampes (501, 502) symétriques par rapport à un plan médian passant par l'axe transversal (Y) et parallèle à l'axe longitudinal (X).

7. Dispositif de commande de boîtes de vitesses suivant la revendication 1, **caractérisé en ce que** la première bille (61) coopère avec la première came (51) pour exercer sur la tige de sélection (2), en fonction de l'écart angulaire entre la position de rotation qu'adopte cette tige (2) autour de l'axe longitudinal (X) et sa position neutre, un couple élastique d'engagement qui éloigne cette tige (2) de sa position neutre et la sollicite vers l'une de ses positions actives de rotation pour tout écart angulaire au moins égal, en valeur absolue, au premier angle limite déterminé.

8. Dispositif de commande de boîtes de vitesses suivant la revendication 1, **caractérisé en ce que** les première et deuxième cames (51, 52) sont différentes l'une de l'autre.

9. Dispositif de commande de boîtes de vitesses suivant la revendication 1, **caractérisé en ce que** la deuxième bille (62) coopère avec la deuxième came (52) pour exercer sur la tige de sélection (2), en fonction de l'écart angulaire entre la position de rotation qu'adopte cette tige (2) autour de l'axe longitudinal (X) et sa position neutre, un couple élastique d'engagement qui éloigne cette tige (2) de sa position neutre et la sollicite vers l'une de ses positions actives de rotation pour tout écart angulaire au moins égal, en valeur absolue, à un deuxième angle limite déterminé, inférieur au premier angle limite déterminé.

10. Dispositif de commande de boîtes de vitesses suivant la revendication 8, **caractérisé en ce que**, pour la position neutre de la tige de sélection (2), la première came (51) offre une cuvette (510) à la première bille (61) et la deuxième came (52) une arête (520) à la deuxième bille (62).

11. Dispositif de commande de boîtes de vitesses suivant la revendication 10, **caractérisé en ce que** la cuvette (510) de la première came (51) est symétrique par rapport au plan médian et allongée parallèlement à l'axe transversal (Y).

12. Dispositif de commande de boîtes de vitesses suivant la revendication 10, **caractérisé en ce que** l'arête (520) de la deuxième came (52) est symétrique par rapport au plan médian et allongée parallèlement à l'axe transversal (Y).
